(19) Europäisches Patentamt / European Patent Office / Office européen des brevets

(11) **EP 3 969 849 B1**

(12) # EUROPÄISCHE PATENTSCHRIFT

(45) Veröffentlichungstag und Bekanntmachung des Hinweises auf die Patenterteilung:
**04.10.2023  Patentblatt 2023/40**

(21) Anmeldenummer: **20723797.5**

(22) Anmeldetag: **22.04.2020**

(51) Internationale Patentklassifikation (IPC):
**G01D 5/14** *(2006.01)*        **B60T 7/04** *(2006.01)*
**G05G 1/38** *(2008.04)*

(52) Gemeinsame Patentklassifikation (CPC):
**B60T 7/042; G01D 1/12; G01D 1/18; G01D 3/08; G01D 5/145;** B60T 2220/04; F16D 2066/003; G05G 1/38

(86) Internationale Anmeldenummer:
**PCT/EP2020/061131**

(87) Internationale Veröffentlichungsnummer:
**WO 2020/229109 (19.11.2020 Gazette 2020/47)**

(54) **VORRICHTUNG UND VERFAHREN ZUR KONTAKTLOSEN BESTIMMUNG EINER POSITION EINES PEDALS**

DEVICE AND METHOD FOR CONTACTLESSLY DETERMINING A POSITION OF A PEDAL

DISPOSITIF ET PROCÉDÉ DE DÉTERMINATION SANS CONTACT D'UNE POSITION D'UNE PÉDALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.05.2019  DE 102019112572**

(43) Veröffentlichungstag der Anmeldung:
**23.03.2022  Patentblatt 2022/12**

(73) Patentinhaber: **HELLA GMBH & CO. KGAA**
**59552 Lippstadt (DE)**

(72) Erfinder:
• **BIALASCHIK, Martin**
  **59174 Kamen (DE)**
• **LABAHN, Nils**
  **59557 Lippstadt (DE)**

(74) Vertreter: **Bringemeier, Ulrich Heinz**
**Hella Corporate Center GmbH**
**Rixbecker Straße 75**
**59552 Lippstadt (DE)**

(56) Entgegenhaltungen:
**DE-A1-102005 033 179    US-B1- 6 650 109**

**Beschreibung**

Die Erfindung betrifft eine Vorrichtung und ein Verfahren zur kontaktlosen Bestimmung einer Position eines Pedals, insbesondere in einem Fahrzeug, aufweisend zumindest einen Magneten und einen Sensor.

Heutige Fahrzeuge übertragen das Positionssignal eines Pedals, beispielsweise eines Bremspedals, über Hydraulikleitungen zu den Bremszylindern. Es sind ebenfalls Systeme bekannt, bei denen die Position des Pedals kontaktlos erfasst und an das Bremssystem weitergeleitet wird.

Die Druckschriften US 6650109 B1 und DE 102005 033179 A1 offenbaren die Merkmale einer Vorrichtung zur kontaktlosen Bestimmung einer Position eines Pedals.

Eine kontaktlose Erfassung der Position kann über einen positionsgebenden Magneten und einen positionsbestimmenden Sensor, beispielsweise einen Hall-Sensor, erfolgen. In diesen Fällen ist der Magnet so angeordnet, dass eine Bewegung des Pedals in eine Bewegung des Magneten überführt wird. Das von dem Magneten erzeugte magnetische Feld wird von dem Sensor erfasst und weiterverarbeitet.

Das magnetische Feld zeichnet sich durch eine Periodizität aus. Damit ist eine eindeutige Positionsbestimmung nur in einem begrenzten Bereich möglich und die maximal zu detektierenden Positionen des Magneten sind limitiert.

Es ist eine Auslegung des Magneten erforderlich, bei der alle Positionen kontinuierlich erfasst werden können. Dafür sind große Magnete notwendig, was zu erhöhten Kosten führt.

An die Funktionssicherheit einer Fahrzeugbremsanlage werden hohe Anforderungen gestellt. Deshalb muss die Bestimmung der Position eines Pedals zur Bremsanforderung ausgesprochen genau und zuverlässig erfolgen.

Um die Anforderungen an die Funktionssicherheit zu gewährleisten, müssen positionsbestimmende Sensoren qualifiziert und störfeldrobust sein. Werden die Anforderungen nicht erfüllt, muss das System redundant ausgelegt werden, was zu erhöhten Bauteil- und Leiterkartenkosten führt.

An diesem Punkt setzt die Erfindung an.

Der Erfindung lag das Problem zu Grunde, eine Vorrichtung der eingangs genannten Art so zu verbessern, dass die fehlende Eindeutigkeit des periodischen magnetischen Feldes nicht relevant ist und gleichzeitig die Größe des positionsgebenden Magneten minimierbar ist, um Kosten zu sparen.

Diese Aufgabe wird erfindungsgemäß dadurch gelöst, dass eine Vorrichtung zur kontaktlosen Bestimmung einer Position eines Pedals, insbesondere in einem Fahrzeug, zumindest einen Magneten und einen Sensor aufweist, wobei der Magnet ein mit der Position des Pedals veränderliches magnetisches Feld erzeugt, welches mittels des Sensors erfassbar ist und der Sensor einen Ausgang zum Bereitstellen von mindestens einem Sensorsignal aufweist, wobei

- die Vorrichtung ein Verarbeitungsmittel aufweist,
- das Verarbeitungsmittel Eingänge zum Einlesen von dem mindestens einen Sensorsignal und Ausgänge zum Ausgeben eines Ausgangssignals aufweist,
- ein erster und ein zweiter Positionsbereich definiert ist, wobei jeder Positionsbereich Positionen des Magneten zum Sensor umfasst,
- das Verarbeitungsmittel aus dem mindestens einen Sensorsignal ein Ausgangssignal generiert, wobei das Ausgangssignal in dem ersten Positionsbereich Werte annimmt, die eindeutig einer Position des Magneten relativ zum Sensor zugeordnet sind, und in dem zweiten Positionsbereich einen konstanten Wert annimmt, der unabhängig von der Position des Magneten relativ zum Sensor ist.

Eine Positionsbestimmung für ein Pedal, insbesondere in einem Fahrzeug zeichnet sich dadurch aus, dass nur ein Teil der möglichen Positionen des Magneten relativ zum Sensor in einem ersten Positionsbereich kontinuierlich erfasst werden muss. In diesem Bereich ist es wichtig, die Position des Magneten genau zu kennen, um eine Bremsanforderung an die Bremsanlage zu geben, die der Position des Pedals entspricht.

Ab einer bestimmten Position, die einer Vollbremsung entsprechen soll, ist die genaue Position des Magneten relativ zum Sensor unerheblich. Es muss vielmehr sichergestellt werden, dass die Bremsanforderung an die Bremsanlage groß genug ist. Hierfür ist ein konstanter Wert als Ausgangssignal einer erfindungsgemäßen Vorrichtung ausreichend, da eine Vollbremsung die maximal mögliche Bremswirkung entfaltet und nicht noch weiter gesteigert werden kann.

Um die Position des Pedals feststellen zu können, besteht die Möglichkeit, dass der Magnet über ein Element mit dem Pedal verbunden ist oder an dem Pedal angebracht ist. So wird eine Bewegung des Pedals in eine Bewegung des Magneten überführt. Da der Sensor nicht zwingend in der Nähe des Pedals liegen muss, kann der Magnet beispielsweise über eine Koppelstange mit dem Pedal verbunden sein und in der Nähe des Sensors angebracht werden.

Üblicherweise werden als Magneten Permanentmagneten verwendet, die ein magnetisches Feld erzeugen. Es ist durchaus vorstellbar, auch andere Arten von Magneten einzusetzen. Der Vorteil eines Permanentmagneten liegt in der vergleichsweise kostengünstigen Realisierung.

Gemäß der Erfindung, erfasst der Sensor mindestens zwei räumliche Komponenten des magnetischen Feldes. Des Weiteren ist es vorgesehen, dass mittels des Sensors aus den mindestens zwei räumlichen Komponenten des magnetischen Feldes je ein Gradient ermittelbar ist und als Sensorsignale am Ausgang bereitstellbar sind.

Es ist ohne weiteres vorstellbar, dass die vom Sensor erfassten räumlichen Komponenten des magnetischen Feldes zunächst als Sensorsignale am Ausgang bereitgestellt werden und die Berechnung der Gradienten im Verarbeitungsmittel stattfindet. Die Gradienten des magnetischen Feldes können zur Positionsbestimmung genutzt werden. Hierbei besteht die Möglichkeit, dass mittels des Verarbeitungsmittels aus den Sensorsignalen ein Positionssignal berechenbar ist.

Da die Gradienten des magnetischen Feldes eine Periodizität aufweisen, kann eine Positionsbestimmung nur in einem abgegrenzten Bereich erfolgen. Es muss sichergestellt sein, dass die fehlende Eindeutigkeit des Signals nicht zu Fehlbestimmungen der Position führt.

Aus diesem Grund besteht die Möglichkeit, dass mittels des Verarbeitungsmittels aus den Sensorsignalen eine Signalstärke berechenbar ist. Die Signalstärke wird aus den Gradienten über die

$$\text{Formel Signalstärke} = \sqrt{\Delta B_x^2 + \Delta B_z^2}$$

berechnet. $B_x$ und $B_z$ stellen hierbei zwei räumliche Komponenten des magnetischen Feldes dar.

Erfindungsgemäß ist mittels des Sensors aus den mindestens zwei räumlichen Komponenten des magnetischen Feldes je ein Gradient ermittelbar und aus den Gradienten ein Positionssignal und/oder eine Signalstärke berechenbar, wobei das Positionssignal und/oder die Signalstärke als Sensorsignale am Ausgang bereitstellbar und an das Verarbeitungsmittel übergebbar sind.

Es ist ohne weiteres vorstellbar, dass auf die Ermittlung der Gradienten verzichtet wird und die Berechnung des Positionssignals und der Signalstärke aus den räumlichen Komponenten des magnetischen Feldes erfolgt. Es bietet allerdings besondere Vorteile zur Berechnung des Positionssignals und der Signalstärke, zunächst die Gradienten des magnetischen Feldes zu ermitteln, da diese besonders störfeldrobust gegenüber äußeren Einflüssen sind.

Die Signalstärke dient hierbei nicht der eigentlichen Positionsbestimmung, sondern wird zur Schwellendetektion genutzt. Die Signalstärke des Gradientensignals zeichnet sich dadurch aus, dass in einem für die Schwellendetektion relevanten Bereich der Wert monoton fällt. Es wird ein vorher festzulegender Schwellenwert im Sensor oder im Verarbeitungsmittel hinterlegt, der auf Über- oder Unterschreiten geprüft wird.

Hierbei kann es vorgesehen sein, dass das Verarbeitungsmittel das Ausgangssignal generiert, wobei bei einer Signalstärke kleiner einem ersten hinterlegten Schwellenwert als Ausgangssignal ein konstanter Wert ausgegeben wird und ansonsten als Ausgangssignal das Positionssignal ausgegeben wird.

Ebenso ist es vorstellbar, dass eine Kombination aus dem Positionssignal und der Signalstärke genutzt wird, um das Ausgangsignal zu generieren.

Hier kann es vorgesehen sein, dass das Verarbeitungsmittel das Ausgangssignal gemäß einer Fallunterscheidung generiert, wobei bei einem Positionssignal größer einem zweiten hinterlegten Schwellenwert oder bei einer Signalstärke kleiner einem dritten hinterlegten Schwellenwert als Ausgangssignal ein konstanter Wert ausgegeben wird und ansonsten als Ausgangssignal das Positionssignal ausgegeben wird.

Es ist ohne weiteres vorstellbar, dass der erste Schwellenwert sich nicht von dem dritten Schwellenwert unterscheidet.

Durch die Kombination aus Positionssignal und Signalstärke ist es möglich, die fehlende Eindeutigkeit des magnetischen Feldes zu kompensieren und eine Kennlinie über den gesamten Messbereich abzubilden. Es sind keine weiteren Kosten für zusätzliche Bauteile und/oder größere Magneten aufzuwenden.

Weitergehend ist es denkbar, mehr als eine Schwelle für das Über- oder Unterschreiten des Positionssignals und/oder der Signalstärke festzulegen, um weitere Positionsbereiche des Ausgangssignals zu definieren, in denen das Ausgangssignal vorbestimmte oder vom Positionssignal oder einer anderen Größe abhängige Werte annehmen kann.

Es ist ohne weiteres vorstellbar, dass der Sensor und das Verarbeitungsmittel ein Bauteil bilden.

Es kann vorgesehen sein, dass ein Verfahren zum Betreiben einer erfindungsgemäßen Vorrichtung wenigstens die nachfolgenden Schritte aufweist:

- das Verarbeitungsmittel liest an einem Eingang mindestens ein Sensorsignal ein und gibt an seinem Ausgang ein Ausgangssignal aus,
- das Verarbeitungsmittel generiert in Anhängigkeit des mindestens einen Sensorsignals ein Ausgangssignal, wobei das Ausgangssignal in dem ersten Positionsbereich Werte annimmt, die eindeutig einer Position des Magneten relativ zum Sensor zugeordnet sind, und in dem zweiten Positionsbereich einen konstanten Wert annimmt, der unabhängig von der Position des Magneten relativ zum Sensor ist.

Um die Sensorsignale am Eingang des Verarbeitungsmittels einlesen zu können, kann es vorgesehen sein, dass ein Verfahren zum Betreiben einer erfindungsgemäßen Vorrichtung weiterhin die folgenden Schritte aufweist:

- der Sensor mindestens zwei räumliche Komponenten des magnetischen Feldes erfasst und

- mittels des Sensors aus den mindestens zwei räumlichen Komponenten des magnetischen Feldes je ein Gradient ermittelt wird und als Sensorsignale am Ausgang bereitgestellt wird.

Aus den Gradienten der räumlichen Komponenten des magnetischen Feldes kann in einem weiteren Verfahrensschritt ein Positionssignal und/oder eine Signalstärke in dem Verarbeitungsmittel ermittelt werden.

Hierbei kann ein Verfahren vorgesehen sein, bei dem das Verarbeitungsmittel das Ausgangssignal generiert, wobei bei einer Signalstärke kleiner einem ersten hinterlegten Schwellenwert als Ausgangssignal ein konstanter Wert ausgegeben wird und ansonsten als Ausgangssignal das Positionssignal ausgegeben wird.

Ebenso ist es vorstellbar, dass ein Verfahren vorgesehen ist, bei dem das Verarbeitungsmittel das Ausgangssignal gemäß einer Fallunterscheidung generiert, wobei bei einem Positionssignal größer einem zweiten hinterlegten Schwellenwert oder bei einer Signalstärke kleiner einem dritten hinterlegten Schwellenwert als Ausgangssignal ein konstanter Wert ausgegeben wird und ansonsten als Ausgangssignal das Positionssignal ausgegeben wird.

Vorteilhafterweise ist ein Fahrzeug mit einer erfindungsgemäßen Vorrichtung ausgestattet.

Anhand der beigefügten Zeichnungen wird die Erfindung nachfolgend näher erläutert. Dabei zeigt:

Fig. 1   eine erfindungsgemäße Vorrichtung
Fig. 2   ein Ablaufdiagramm eines Verfahrens gemäß den Ansprüchen
Fig. 3   einen Signalverlauf des Systems

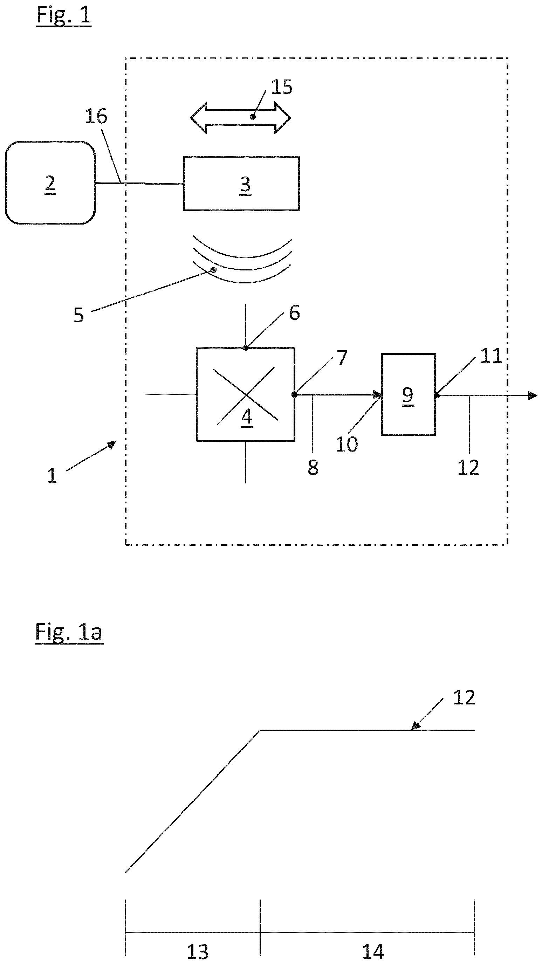

Figur 1 zeigt eine erfindungsgemäße Vorrichtung 1 zur kontaktlosen Bestimmung einer Position eines Pedals 2. Derartige Vorrichtungen 1 kommen vorzugsweise in Bremsanalgen von heutigen Fahrzeugen zum Einsatz.

Über ein verbindendes Element 16, beispielsweise eine Koppelstange, ist ein Magnet 3 an dem Pedal 2 angebracht, für welches eine Positionsbestimmung durchgeführt werden soll. So ist es möglich, eine Bewegung des Pedals in eine Bewegung 15 des Magneten 3 zu überführen.

Es ist ebenfalls denkbar, dass der Magnet 3 direkt an dem Pedal 2 angebracht ist. Allerdings wird in den meisten Fällen der Sensor 4 nicht in unmittelbarer Nähe zu dem Pedal 2 liegen, so dass eine Übertragung der Bewegung des Pedals in die Nähe des Sensors 4 erfolgen muss.

Der Magnet 3, vorzugsweise wird ein Permanentmagnet verwendet, erzeugt ein magnetisches Feld 5, welches mit der Position des Magneten 3 veränderlich ist. Dieses magnetische Feld 5 wird von dem Sensor 4 über geeignete Mittel 6 innerhalb oder an dem Sensor 4 erfasst. Beispielsweise kann es sich bei dem Sensor 4 um einen Hall-Sensor handeln, dessen hall-sensitive Fläche 6 geeignet ist, um das magnetische Feld zu erfassen. Erfindungsgemäß wird ein Sensor 4 verwendet, der mindestens zwei räumliche Komponenten an mindestens zwei leicht gegeneinander verschobenen Positionen des magnetischen Feldes 5 erfassen kann. Aus den räumlichen Komponenten der mindestens zwei Positionen des magnetischen Feldes 5 werden die Gradienten ermittelt. Dies geschieht vorzugsweise in dem Sensor 4.

Der Sensor 4 weist einen Ausgang 7 zum Bereitstellen des Sensorsignals oder der Sensorsignale 8 auf, das oder die über einen Eingang 10 zum Einlesen des Signals 8 an ein Verarbeitungsmittel 9 übergeben werden.

Es ist aber ohne weiteres denkbar, dass die erfassten räumlichen Komponenten des magnetischen Feldes 5 zunächst an dem Ausgang 7 des Sensors 4 bereitgestellt werden und die Ermittlung der Gradienten bereits im Verarbeitungsmittel 9 stattfinden. Aus den mindestens zwei ermittelten Gradienten wird aus der Winkelinformation ein Positionssignal berechnet. Dieses Positionssignal ist nur in einem bestimmten Bereich eindeutig, so dass eine Positionsbestimmung in einem großen Messbereich anhand des Positionssignals alleine nicht eindeutig möglich ist. Daher wird aus den ermittelten Gradienten zusätzlich eine Signalstärke berechnet.

Durch eine geeignete Kombination dieser beiden Signale ist es möglich, dass an einem Ausgang 11 des Verarbeitungsmittels 9 ein Ausgangssignal 12 bereitgestellt wird, welches geeignet für die Bremsanforderung ist.

Figur 1a zeigt ein bevorzugtes Ausgangssignal 12. Das Ausgangssignal 12 weist mindestens zwei Positionsbereiche 13, 14 auf, wobei das Ausgangssignal 12 in dem ersten Positionsbereich 13 monoton steigt. Über diese monotone Steigung nimmt das Ausgangssignal 12 Werte an, die eindeutig einer Position des Magneten 3 relativ zum Sensor 4 und damit einer Position des Pedals 2 zugeordnet sind.

In dem zweiten Positionsbereich 14, beispielsweise ist dies der Bereich einer Vollbremsung, ist eine differenzierte Bremskraftanforderung nicht notwendig. Es ist lediglich erforderlich, dass die volle Bremskraft abgerufen wird. Aus diesem Grunde nimmt das Ausgangssignal 12 in dem zweiten Positionsbereich 14 einen konstanten Wert an.

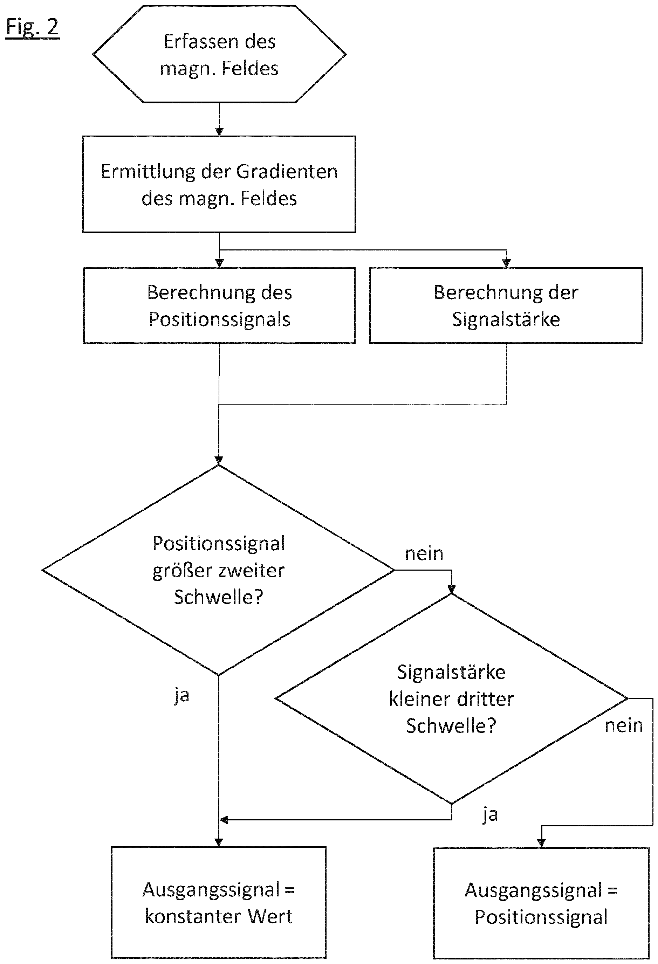

In Figur 2 ist anhand eines Ablaufdiagrammes das Verfahren nach den Ansprüchen näher erläutert.

Als erster Schritt wird das magnetische Feld 5 des Magneten 3 von einen Sensor 4 erfasst. Dies geschieht nach mindestens zwei räumlichen Komponenten getrennt. Wenn die Erfassung an mindestens zwei leicht gegeneinander verschobenen Positionen erfolgt, kann aus den erfassten räumlichen Komponenten des magnetischen Feldes 5 je ein Gradient ermittelt werden.

Aus den mindestens zwei ermittelten Gradienten ist es möglich, aufgrund einer Winkelbeziehung ein Positionssignal zu berechnen. Ebenso ist es möglich, aus den Gradienten eine Signalstärke zu berechnen.

Das Ausgangsignal 12 wird gemäß einer Fallunterscheidung generiert.

Zunächst wird überprüft, ob das Positionssignal einen Wert größer einer festgelegten zweiten Schwelle angenommen hat. Ist dies der Fall, befindet sich das Pedal 2 in einer Position, die dem zweiten Positionsbereich 14 entspricht, beispielsweise bei einer Vollbremsung. Als Ausgangsignal 12 wird der konstante Wert ausgegeben.

Hat das Positionssignal einen Wert angenommen, der kleiner ist als die zweite Schwelle, findet eine weitere Abfrage statt.

Es wird überprüft, ob die ermittelte Signalstärke unter einer dritten Schwelle liegt. Ist dies der Fall, befindet sich das Pedal 2 in einer Position, die dem zweiten Positionsbereich entspricht. Das Positionssignal, welches kleiner als die zweite Schwelle war, ist dann auf die fehlende Eindeutigkeit des Positionssignals insbesondere im zweiten Positionsbereich 14 zurückzuführen.

Als Ausgangsignal 12 wird auch in diesem Fall der konstante Wert angegeben.

Liegt die Signalstärke hingegen oberhalb der dritten Schwelle, befindet sich das Pedal 2 in einer Position, die dem ersten Positionsbereich entspricht. Es ist eine differenzierte Bremskraftanforderung notwendig, die über eine eindeutige Position des Magneten 3 relativ zum Sensor 4 bestimmt wird.

Aus diesem Grunde wird als Ausgangsignal 12 das Positionssignal ausgegeben.

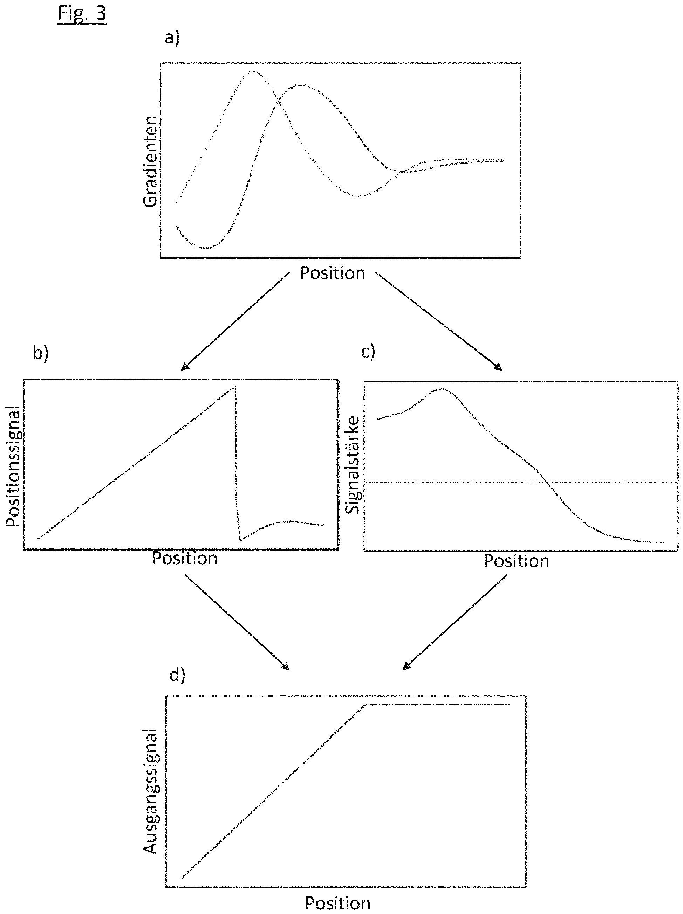

In Figur 3 wird ein möglicher Signalverlauf des Systems gezeigt.

In Teil a) werden typische Gradienten gezeigt, die aus zwei räumlichen Komponenten des magnetischen Feldes 5 ermittelt wurden.

Anhand der Gradienten werden das Positionssignal (b) und die Signalstärke (c) gewonnen. Die Kennlinie des Positionssignal zeigt zunächst einen monoton steigen Verlauf, dann allerdings einen Sprung und wiederum einen weiteren Anstieg. Dieser Sprung macht die Kennlinie in dem erforderlichen Messbereich uneindeutig.

Die Signalstärke zeigt insbesondere in dem hinteren Teil der Kennlinie einen monoton fallenden Verlauf, der eine Schwellendetektion möglich macht.

Aus der Kombination des Positionssignals und der Signalstärke nach der in Figur 2 beschriebenen Fallunterscheidung ist es möglich, das gewünschte Ausgangsignal 12 zu generieren (Teil d). Es ist der erste Positionsbereich 13 mit einer monoton steigenden Kennlinie erkennbar, aufgrund derer eine eindeutige Position des Magneten 3 relativ zum Sensor 4 zuordnenbar ist und eine zweiter Positionsbereich 14, in dem das Ausgangsignal 12 einen konstanten Wert annimmt.

Bezugszeichenliste

1    Vorrichtung
2    Pedal
3    Magnet
4    Sensor
5    magnetisches Feld
6    Mittel zum Erfassen des magnetischen Feldes
7    Ausgang des Sensors

8    Sensorsignal
9    Verarbeitungsmittel
10   Eingang des Verarbeitungsmittels
11   Ausgang zum Ausgeben des Ausgangssignals
12   Ausgangssignal
13   erster Positionsbereich
14   zweiter Positionsbereich
15   Bewegung des Pedals
16   Element zwischen Pedal und Magnet

**Patentansprüche**

1. Vorrichtung (1) zur kontaktlosen Bestimmung einer Position eines Pedals (2) in einem Fahrzeug, aufweisend zumindest einen Magneten (3) und einen Sensor (4), wobei

> - der Magnet (3) ein mit der Position des Pedals veränderliches magnetisches Feld (5) erzeugt, welches mittels des Sensors (4) erfassbar ist, der Sensor (4) einen Ausgang (7) zum Bereitstellen von mindestens einem Sensorsignal (8) aufweist, wobei
> - die Vorrichtung (1) ein Verarbeitungsmittel (9) aufweist,
> - das Verarbeitungsmittel (9) Eingänge (10) zum Einlesen von dem mindestens einen Sensorsignal (8) und Ausgänge (11) zum Ausgeben eines Ausgangssignals (12) aufweist,
> - ein erster und ein zweiter Positionsbereich (13, 14) definiert ist, wobei jeder Positionsbereich (13, 14) Positionen des Magneten (3) zum Sensor (4) umfasst,
> - das Verarbeitungsmittel (9) aus dem mindestens einen Sensorsignal (8) ein Ausgangssignal (12) generiert, wobei das Ausgangssignal (12) in dem ersten Positionsbereich (13) Werte annimmt, die eindeutig einer Position des Magneten (3) relativ zum Sensor (4) zugeordnet sind, und in dem zweiten Positionsbereich (14) einen konstanten Wert annimmt, der unabhängig von der Position des Magneten (3) relativ zum Sensor (4) ist, **dadurch gekennzeichnet, dass**
> - der Sensor (4) mindestens zwei räumliche Komponenten des magnetischen Feldes (5) erfasst,
> - mittels des Sensors (4) aus den mindestens zwei räumlichen Komponenten des magnetischen Feldes (5) je ein Gradient ermittelbar ist und aus den Gradienten ein Positionssignal und/oder eine Signalstärke berechenbar ist, wobei das Positionssignal und/oder die Signalstärke als Sensorsignale (8) am Ausgang (7) bereitstellbar und an das Verarbeitungsmittel (9) übergebbar sind,

>     a) das Verarbeitungsmittel (9) das Ausgangssignal (12) generiert, wobei bei einer Signalstärke kleiner einem ersten hinterlegten Schwellenwert als Ausgangssignal (12) ein konstanter Wert ausgegeben wird und ansonsten als Ausgangssignal (12) das Positionssignal ausgegeben wird, **oder**

**b)** das Verarbeitungsmittel (9) das Ausgangssignal (12) gemäß einer Fallunterscheidung generiert, wobei bei einem Positionssignal größer einem zweiten hinterlegten Schwellwert oder bei bei einer Signalstärke kleiner einem dritten hinterlegten Schwellenwert als Ausgangssignal (12) ein konstanter Wert ausgegeben wird und ansonsten als Ausgangssignal (12) das Positionssignal ausgegeben wird.

**2.** Vorrichtung (1) nach Anspruch 1, **dadurch gekennzeichnet, dass** der Magnet (3) über ein Element (16) mit dem Pedal (2) verbunden ist oder an dem Pedal (2) angebracht ist.

**3.** Vorrichtung (1) nach einem der Ansprüche 1 oder 2, **dadurch gekennzeichnet, dass** der Sensor (4) und das Verarbeitungsmittel (9) ein Bauteil bilden.

**4.** Verfahren zum Betreiben einer Vorrichtung (1) nach einem der Ansprüche 1 bis 3, wobei das Verfahren wenigstens die nachfolgenden Schritte aufweist:

- das Verarbeitungsmittel (9) liest an einem Eingang (10) mindestens ein Sensorsignal (8) ein und gibt an seinem Ausgang (11) ein Ausgangssignal (12) aus,

- das Verarbeitungsmittel (9) generiert in Abhängigkeit des mindestens einen Sensorsignals (8) das Ausgangssignal (12), wobei das Ausgangssignal (12) in dem ersten Positionsbereich Werte annimmt, die eindeutig einer Position des Magneten (3) relativ zum Sensor (4) zugeordnet sind, und in dem zweiten Positionsbereich einen konstanten Wert annimmt, der unabhängig von der Position des Magneten (3) relativ zum Sensor (4) ist, wobei

- der Sensor (4) mindestens zwei räumliche Komponenten des magnetischen Feldes erfasst,

- mittels des Sensors (3) aus den mindestens zwei räumlichen Komponenten des magnetischen Feldes (5) je ein Gradient ermittelt wird und als Sensorsignale (8) am Ausgang (7) bereitgestellt wird,

- aus den Gradienten ein Positionssignal und/oder eine Signalstärke berechnet wird,

**a)** das Verarbeitungsmittel (9) das Ausgangssignal (12) generiert, wobei bei einer Signalstärke kleiner einem ersten hinterlegten Schwellenwert als Ausgangssignal (12) ein konstanter Wert ausgegeben wird und ansonsten als Ausgangssignal (12) das Positionssignal ausgegeben wird,

**oder**

**b)** das Verarbeitungsmittel (9) das Ausgangssignal (12) gemäß einer Fallunterscheidung generiert, wobei bei einem Positionssignal größer einem zweiten hinterlegten Schwellwert oder bei bei einer Signalstärke kleiner einem dritten hinterlegten Schwellenwert als Ausgangssignal (12) ein konstanter Wert ausgegeben wird und ansonsten als Ausgangssignal (12) das Positionssignal ausgegeben wird.

**5.** Kraftfahrzeug mit einer Vorrichtung (1) nach einem der Ansprüche 1 bis 3.

**Claims**

**1.** Device (1) for contactless determination of a position of a pedal (2) in a vehicle, featuring at least one magnet (3) and a sensor (4), wherein

- the magnet (3) generates a magnetic field (5) that changes with the position of the pedal and that can be detected by the sensor (4), the sensor (4) features an output (7) for providing at least one sensor signal (8), wherein
- the device (1) features a processing aid (9),
- the processing aid (9) features inputs (10) for reading in the at least one sensor signal (8) and outputs (11) for outputting an output signal (12),
- a first and a second position range (13, 14) is defined, wherein each position range (13, 14) comprises positions of the magnet (3) to the sensor (4),
- the processing aid (9) generates from the at least one sensor signal (8) an output signal (12), wherein the output signal (12) in the first position range (13) receives values that are clearly allocated to a position of the magnet (3) relative to the sensor (4), and in the second position range (14) receives a constant value that is independent of the position of the magnet (3) relative to the sensor (4), **characterized in that**
- the sensor (4) records at least two spatial components of the magnetic field (5),
- the sensor (4) makes it possible to determine a gradient from each of the at least two spatial components of the magnetic field (5) and to calculate from the gradients a position signal and/or a signal strength, wherein the position signal and/or the signal strength can be made available as sensor signals (8) at the output (7) and be transferred to the processing aid (9),

**a)** the processing aid (9) generates the output signal (12), where at a signal strength of less than a first stored threshold value, a constant value is output as the output signal (12) and otherwise the position signal is output as the output signal (12),
**or**
**b)** the processing aid (9) generates the output signal (12) according to a case differentiation, wherein at a position signal of greater than a second stored threshold value or at a signal strength of less than a third stored threshold value a constant value is output as the output signal (12) and otherwise the position signal is output as the output signal (12).

**2.** Device (1) in accordance with Claim 1, **characterized in that** the magnet (3) is connected to the pedal (2) via an element (16) or is attached to the pedal (2).

**3.** Device (1) in accordance with one of Claims 1 or 2, **characterized in that** the sensor (4) and the processing aid (9) form a component.

**4.** Method of operating a device (1) in accordance with one of Claims 1 through 3, wherein the method features at least the following steps:

- the processing aid (9) reads in a sensor signal (8) at an input (10) and outputs an output signal (12) at its output (11),
- the processing aid (9) generates the output signal (12) as a factor of the at least one sensor signal (8), wherein the output signal (12) receives in the first position range values that are allocated clearly to a position of the magnet (3) relative to the sensor **(4)** and in the second position range receives a constant value that is independent from the position of the magnet (3) relative to the sensor **(4),** wherein
- the sensor **(4)** comprises at least two spatial components of the magnetic field,
- a gradient is determined by means of the sensor (3) from each of the at least one two spatial components of the magnetic field (5) and made available as a sensors signals (8) at the output (7),
- a position signal and/or a signal strength is calculated from the gradients,

**a)** the processing aid (9) generates the output signal (12), where at a signal strength of less than a first stored threshold value, a constant value is output as the output signal (12) and otherwise the position signal is output as the output signal (12),
**or**

**b)** the processing aid (9) generates the output signal (12) according to a case differentiation, wherein at a position signal of greater than a second stored threshold value or at a signal strength of less than a third stored threshold value a constant value is output as the output signal (12) and otherwise the position signal is output as the output signal (12).

**5.** Motor vehicle with a device (1) in accordance with one of Claims 1 through 3.

**Revendications**

**1.** Dispositif (1) permettant de déterminer sans contact la position d'une pédale (2) dans un véhicule, présentant au moins un aimant (3) et un capteur (4), sachant que

- l'aimant (3) génère un champ magnétique (5) qui varie avec la position de la pédale et qui peut être détecté au moyen du capteur (4), le capteur (4) comporte une sortie (7) pour la mise à disposition d'au moins un signal de capteur (8), sachant que
- le dispositif (1) comporte un moyen de traitement (9),
- le moyen de traitement (9) comporte des entrées (10) pour la lecture d'au moins un signal de capteur (8) et des sorties (11) pour l'émission d'un signal de sortie (12),
- une première et une deuxième plage de positions (13, 14) sont définies, chaque plage de positions (13, 14) comprenant des positions de l'aimant (3) par rapport au capteur (4),
- le moyen de traitement (9) génère un signal de sortie (12) à partir d'au moins un signal de capteur (8), le signal de sortie (12) prenant dans la première plage de positions (13) des valeurs qui sont clairement associées à une position de l'aimant (3) par rapport au capteur (4) et, dans la deuxième plage de positions (14), une valeur constante indépendante de la position de l'aimant (3) par rapport au capteur (4), **caractérisé en ce que**
- le capteur (4) détecte au moins deux composantes spatiales du champ magnétique (5),
- un gradient peut être déterminé au moyen du capteur (4) à partir d'au moins deux composantes spatiales du champ magnétique (5) et un signal de position et/ou une intensité de signal peuvent être calculés à partir des gradients, le signal de position et/ou l'intensité de signal pouvant être mis à disposition en tant que signaux de capteur (8) à la sortie (7) et pouvant être transmis au moyen de traitement (9),

**a)** le moyen de traitement (9) génère le signal de sortie (12), une valeur constante étant émise comme signal de sortie (12) lorsque l'intensité du signal est inférieure à une première valeur seuil mémorisée et le signal de position étant sinon émis comme signal de sortie (12),

**ou**

**b)** le moyen de traitement (9) génère le signal de sortie (12) selon une différenciation de cas, une valeur constante étant émise comme signal de sortie (12) pour un signal de position supérieur à une seconde valeur seuil mémorisée ou pour une intensité de signal inférieure à une troisième valeur seuil mémorisée et le signal de position étant sinon émis comme signal de sortie (12).

2. Dispositif (1) selon la revendication 1, **caractérisé en ce que** l'aimant (3) est relié à la pédale (2) par un élément (16) ou est monté sur la pédale (2).

3. Dispositif (1) selon l'une des revendications 1 ou 2, **caractérisé en ce que** le capteur (4) et le moyen de traitement (9) forment un seul et même élément.

4. Procédé de mise en oeuvre d'un dispositif (1) selon l'une des revendications 1 à 3, le procédé comprenant au moins les étapes suivantes :

    - le moyen de traitement (9) lit sur une entrée (10) au moins un signal de capteur (8) et délivre à sa sortie (11) un signal de sortie (12),
    - le moyen de traitement (9) génère le signal de sortie (12) en fonction d'au moins un signal de capteur (8), le signal de sortie (12) prenant dans la première plage de positions des valeurs qui sont associées de manière univoque à une position de l'aimant (3) par rapport au capteur **(4)** et, dans la deuxième plage de positions, une valeur constante qui est indépendante de la position de l'aimant (3) par rapport au capteur **(4),** sachant que
    - le capteur **(4)** détecte au moins deux composantes spatiales du champ magnétique,
    - un gradient est déterminé à partir d'au moins deux composantes spatiales du champ magnétique (5) au moyen du capteur (3) et est mis à disposition à la sortie (7) sous forme de signaux de capteur (8),
    - un signal de position et/ou une intensité de signal est calculé(e) à partir des gradients,

        **a)** le moyen de traitement (9) génère le signal de sortie (12), une valeur constante étant émise comme signal de sortie (12) lorsque l'intensité du signal est inférieure à une première valeur seuil mémorisée et le signal de position étant sinon émis comme signal de sortie (12),

        **ou**

        **b)** le moyen de traitement (9) génère le signal de sortie (12) selon une différenciation de cas, une valeur constante étant émise comme signal de sortie (12) pour un signal de position supérieur à une seconde valeur seuil mémorisée ou pour une intensité de signal inférieure à une troisième valeur seuil mémorisée et le signal de position étant sinon émis comme signal de sortie (12).

5. Véhicule automobile équipé d'un dispositif (1) selon l'une des revendications 1 à 3.

Fig. 1

Fig. 1a

Fig. 2

Erfassen des
magn. Feldes

Ermittlung der Gradienten
des magn. Feldes

Berechnung des
Positionssignals

Berechnung der
Signalstärke

Positionssignal
größer zweiter
Schwelle?

nein

ja

Signalstärke
kleiner dritter
Schwelle?

nein

ja

Ausgangssignal =
konstanter Wert

Ausgangssignal =
Positionssignal

Fig. 3

a)

Gradienten

Position

b)

Positionssignal

Position

c)

Signalstärke

Position

d)

Ausgangssignal

Position

**EP 3 969 849 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6650109 B1
- DE 102005033179 A1